# DEMANDE DE BREVET EUROPEEN

(11) **EP 2 607 166 A1**
(43) Date de publication de la demande: **26.06.2013**
(21) Numéro de dépôt: 12197323.4
(22) Date de dépôt: 14.12.2012
(51) Int. Cl.: B60Q 1/00

(54) **Ensemble d'un projecteur pour véhicule automobile et d'au moins un module de remplacement, et procédé de remise en état du projecteur**

(30) Priorité: 19.12.2011 FR 1161883
(71) Demandeur: VALEO VISION, 93012 Bobigny Cedex (FR)
(72) Inventeur: Albou, Pierre, 75013 Paris (FR); Puente, Jean-Claude, 93190 LIVRY GARGAN (FR)

(57) **Abrégé**

Ensemble d'un projecteur pour véhicule automobile et d'au moins un module de remplacement avec source lumineuse, le projecteur comportant un boîtier dans lequel est disposé au moins un module d'origine avec source lumineuse, en particulier à LED, la paroi du boîtier comportant au moins un contour sécable (8.1) dédié à un module du boîtier, propre à être découpé pour libérer une ouverture d'accès (9.1) pour le remplacement du module lorsque sa source lumineuse est défaillante; le module de remplacement (3a) avec source lumineuse est attaché par une liaison (10) à une pièce de fermeture (11) du boîtier, le contour de la pièce de fermeture correspondant au contour dédié et étant propre à fermer l'ouverture libérée (9.1), le profil du contour dédié permettant d'éviter le montage d'un module de remplacement avec source lumineuse non appropriée.

## Description

L'invention est relative à l'ensemble d'un projecteur ou d'un feu pour véhicule automobile et d'au moins un module de remplacement, ce module étant notamment avec une source lumineuse, le projecteur ou le feu étant du genre de ceux qui comportent un boîtier dans lequel est disposé au moins un module d'origine, ce module étant notamment avec une source lumineuse, en particulier à LED (diode électroluminescente), le boîtier comportant une paroi, comportant notamment une portion de paroi périphérique solidaire d'une paroi de fond. Le boîtier est ouvert sur une face opposée à la paroi de fond, cette face du boîtier étant fermée par une glace, fixée de manière permanente non démontable.

Le terme "glace" utilisé dans cette description et dans les revendications désigne d'une manière générale une paroi transparente ou translucide qui peut être en matière plastique ou en verre.

Lorsque la source lumineuse d'un module de projecteur à glace non démontable est défaillante, le remplacement de ce module est difficile, ou même impossible à réaliser, de sorte que le plus souvent le projecteur ou le feu sont remplacés en totalité. Il en résulte un coût relativement élevé, alors qu'une partie seulement est défaillante dans le projecteur ou feu mis au rebut.

L'invention a pour but, surtout, de fournir un ensemble de projecteur ou de feu pour véhicule automobile, avec au moins un module de remplacement, selon lequel il est possible de réparer le projecteur ou le feu de manière économique et sûre, en évitant les confusions dans les remplacements des pièces, et des détrompages internes au boîtier.

Selon l'invention, l'ensemble d'un projecteur ou d'un feu pour véhicule automobile et d'au moins un module de remplacement, ce module étant notamment avec une source lumineuse, le projecteur ou le feu comportant un boîtier dans lequel est disposé au moins un module d'origine, ce module étant notamment avec une source lumineuse, en particulier à LED, le boîtier comportant une paroi, comportant notamment une portion de paroi périphérique solidaire d'une portion de paroi de fond, est **caractérisé en ce que :**
- la paroi du boîtier comporte au moins un contour sécable dédié au module d'origine, contour propre à être découpé pour libérer une ouverture d'accès pour le remplacement de ce module par un module de remplacement,
- et le module de remplacement est attaché par une liaison à une pièce de fermeture, le contour de la pièce de fermeture correspondant au contour dédié et étant propre à fermer l'ouverture libérée, le profil du contour dédié étant choisi de façon à ce que ce profil soit associé de manière univoque au module d'origine permettant ainsi d'éviter le montage d'un module de remplacement inapproprié à la place du module d'origine.

Le projecteur ou le feu peuvent comporter plusieurs modules avec sources lumineuses différentes, en particulier pour assurer des fonctions route, code, feu diurne, feu de ville, auquel cas :
- la paroi du boîtier comporte autant de contours sécables dédiés différents que de modules avec sources lumineuses différentes, chaque contour dédié étant spécifique à l'un des modules et à sa source lumineuse,
- et les modules de remplacement avec sources lumineuses correspondent aux différents modules d'origine, chaque module de remplacement étant attaché à une pièce de fermeture dont le contour correspond au contour dédié au module d'origine correspondant.

La spécificité des contours dédiés permet d'éviter une confusion lors du remplacement d'une source lumineuse défaillante.

La liaison entre pièce de fermeture et module peut être souple, en particulier réalisée par un lien flexible, un lien élastique, ou une lame flexible, auquel cas la pièce de fermeture peut être rigide ou souple.

Dans le cas où la pièce de fermeture est constituée d'un capot souple, la liaison entre le capot souple et le module peut être rigide. La partie rigide de liaison peut servir, le cas échéant, de "poignée" de montage. La présence d'un élément flexible capot et/ou attache est avantageuse pour permettre l'installation du module de remplacement et sa fixation dans le boîtier, ainsi que pour les réglages de la correction.

Généralement, les modules sont équipés d'une source lumineuse constituée par au moins une LED.

La pièce de fermeture, capot rigide ou souple, peut comporter sur son bord un moyen d'encliquetage pour fixation au boîtier.

L'invention est également relative à un projecteur ou feu pour véhicule automobile, comportant un boîtier dans lequel est disposé au moins un module d'origine, ce module étant notamment avec une source lumineuse, en particulier à LED, le boîtier comportant une paroi, comportant notamment une portion de paroi périphérique solidaire d'une portion de paroi de fond, **caractérisé en ce que** :
- la paroi du boîtier comporte au moins un contour sécable dédié au module d'origine, contour propre à être découpé pour libérer une ouverture d'accès pour le remplacement de ce module par un module de remplacement, le profil du contour dédié étant choisi de façon à ce que ce profil soit associé de manière univoque au module d'origine permettant ainsi d'éviter le montage d'un module de remplacement inapproprié à la place du module d'origine, de préférence le dispositif étant dépourvu de liaison entre le module d'origine et la portion de paroi délimitée par le contour sécable.

Le projecteur ou le feu peut comporter plusieurs modules avec sources lumineuses différentes, en particulier pour assurer des fonctions route, code, feu diurne, feu de ville, indicateur de direction ou feu de gabarit (également appelé side-marker), auquel cas la paroi du boîtier comporte autant de contours sécables dédiés différents que de modules avec sources lumineuses différentes, chaque contour dédié étant spécifique de l'un des modules et de sa source lumineuse.

L'invention est également relative à un feu de signalisation arrière pour véhicule automobile d'un ensemble tel que défini précédemment, auquel cas le feu peut comporter plusieurs modules avec sources lumineuses différentes, en particulier pour assurer des fonctions de feu de recul ou de feu stop.

Les contours sécables sont avantageusement prévus sur la partie supérieure de la paroi périphérique du boîtier, ou dans le fond de ce boîtier.

Dans le cas où le boîtier comporte plusieurs contours sécables, on prévoit de préférence, sur chaque contour sécable, un repère d'identification du module associé à ce contour sécable, et du module de remplacement correspondant.

L'invention concerne aussi le projecteur, ou feu, après le remplacement de son module d'origine. Un tel projecteur ou feu pour véhicule automobile comporte un boîtier dans lequel est disposé au moins un module de remplacement à la place d'un module d'origine qui a été retiré du boîtier, ce module de remplacement étant notamment avec une source lumineuse, en particulier à LED, le boîtier comportant une paroi, comportant notamment une portion de paroi périphérique solidaire d'une portion de paroi de fond, et est **caractérisé en ce que :**
- la paroi du boîtier comporte au moins un contour découpé pour libérer une ouverture d'accès ayant servi au remplacement du module d'origine par le module de remplacement,
- et le module de remplacement est attaché par une liaison à une pièce de fermeture, le contour de la pièce de fermeture correspondant au contour dédié et fermant l'ouverture libérée, le profil du contour dédié étant choisi de façon à ce que ce profil soit associé de manière univoque au module d'origine permettant ainsi d'éviter le montage d'un module de remplacement inapproprié à la place du module d'origine.

L'invention est également relative à un module de remplacement avec source lumineuse pour un projecteur ou feu tel que défini précédemment, **caractérisé en ce que** le module de remplacement correspond à un module du boîtier, et est attaché à une pièce de fermeture dont le contour correspond au contour dédié audit module installé dans le boîtier.

L'invention concerne également un procédé de remise en état d'un projecteur ou d'un feu pour véhicule automobile tel que défini précédemment, dont un module avec source lumineuse, en particulier une LED, est défaillant, **caractérisé en ce que** :
- on découpe le contour sécable dédié au module à source lumineuse défaillante et on retire la zone de paroi située à l'intérieur de ce contour;
- on extrait du boîtier le module avec source défaillante;
- on choisit le module de remplacement avec source lumineuse appropriée, et pièce de fermeture attachée;
- on installe le module de remplacement dans le boîtier, et on procède au réglage, la pièce de fermeture étant laissée libre pendant cette installation et ce réglage;
- et on referme le boîtier en fixant la pièce de fermeture dans l'ouverture qui avait été libérée par le contour sécable découpé.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une représentation schématique, en vue de côté avec parties arrachées, d'un projecteur lumineux de véhicule automobile d'un ensemble selon l'invention.
Fig. 2 est une section partielle suivant la ligne II-II de Fig. 1 représentant schématiquement une fixation d'un module avec source lumineuse.
Fig. 3 est une vue partielle de dessus du boîtier de projecteur avec deux contours sécables.
Fig. 4 est une coupe verticale partielle du boîtier de projecteur lors de la mise en place d'un module de remplacement.
Fig. 5 est une coupe verticale partielle semblable à Fig. 4 illustrant le boîtier avec le module de remplacement mis en place.
Fig. 6 est une vue schématique en perspective d'une variante de module de remplacement avec source lumineuse.
Fig. 7 est une vue de dessus partielle du boîtier de projecteur dans lequel a été découpé un contour sécable rectangulaire.
Fig. 8 est une vue en perspective schématique du module de remplacement dont la pièce de fermeture correspond au passage libéré selon Fig. 7 et
Fig. 9 est une coupe horizontale schématique partielle illustrant une variante de boîtier et de module de remplacement.

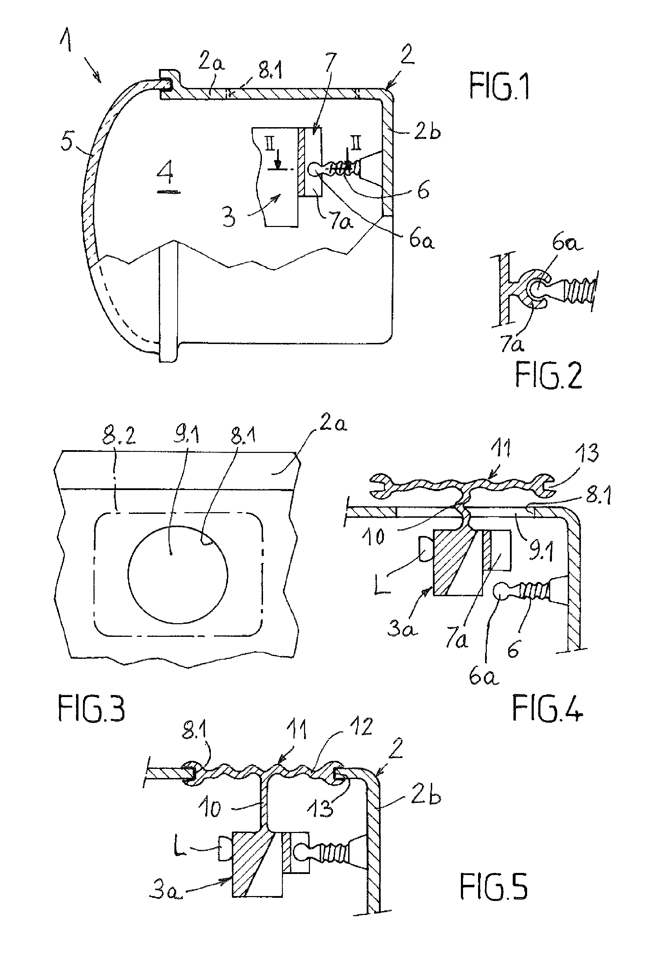

En se reportant à Fig. 1 des dessins, on peut voir, schématiquement représenté, un projecteur lumineux 1 pour véhicule automobile comportant un boîtier 2, en matière plastique moulée, dans lequel est disposé au moins un module 3 avec source lumineuse d'origine, en particulier une LED (diode électroluminescente). Le boîtier 2 comporte une paroi périphérique 2a solidaire d'une paroi de fond 2b et est ouvert sur la face 4 opposée à la paroi de fond 2b. La face 4 du boîtier est fermée par une glace 5, en matière plastique transparente ou translucide, fixée de manière permanente non démontable, en particulier par collage, au boîtier 2.

Le module 3, avec sa source lumineuse, est maintenu dans le boîtier 2 à l'aide d'un correcteur ou support 6, schématiquement représenté, qui comporte à une extrémité une rotule 6a coopérant avec une capsule du module 3. Le correcteur 6 est maintenu sur la paroi de fond 2b de manière réglable suivant la direction de l'axe du boîtier 2. La partie arrière du module 3 comporte un moyen de maintien 7 propre à coopérer de manière réglable en hauteur et en direction avec la rotule 6a. Le moyen de maintien 7 peut être réalisé sous la forme d'une glissière verticale 7a à section horizontale en C propre à recevoir la rotule 6a en exerçant un serrage élastique. Des moyens non représentés sont prévus de manière classique pour que le module 3 conserve sa position relative au boîtier 2 après réglage.

Selon l'invention, la paroi 2 du boîtier comporte, de préférence dans la partie supérieure de la paroi périphérique 2a, au moins un contour sécable 8.1 dédié au module 3 avec source lumineuse. Ce contour 8.1 est propre à être découpé pour libérer une ouverture d'accès 9.1 (Fig. 3 et 4) pour le remplacement du module 3 lorsque la LED de ce module est défaillante.

Un module de remplacement 3a (Fig.4 et 5) avec une source lumineuse L constituée par une LED de mêmes caractéristiques que celle du module 3, est attaché par une liaison 10 à une pièce de fermeture 11 dont le contour correspond au contour sécable dédié 8.1. La pièce 11 est propre à fermer l'ouverture libérée 9.1. Le profil du contour de la pièce 11 spécifique au contour dédié 8.1 permet d'éviter le montage d'un module de remplacement qui ne serait pas approprié.

Dans l'exemple illustré sur Figs. 1 à 5, le contour dédié 8.1 est circulaire. La pièce de fermeture 11 est constituée par un capot souple 12, notamment en matière élastomère, comportant en bordure un bourrelet dans lequel est prévue une rainure circulaire 13 formant moyen d'encliquetage et de fixation sur le bord de l'ouverture 9.

Le module de remplacement 3a comporte une glissière 7a pour le montage de ce module sur le support 6.

Le remplacement du module 3 dont la source lumineuse est défaillante est effectué de la manière suivante.

Le contour sécable 8.1 est découpé et l'ouverture d'accès 9 est libérée. Le module 3 défaillant est extrait du boîtier 2 et le module de remplacement 3a est introduit par l'ouverture 9. La pièce de fermeture 11 reste libre par rapport au boîtier 2 pour permettre, grâce à la flexibilité du capot 12 et de la liaison 10, la mise en place du module 3a sur le support 6 et son réglage. Lorsque l'installation du module 3a est terminée, la pièce de fermeture 11 peut être fixée sur le bord de l'ouverture 9 comme illustré sur Fig. 5, notamment par engagement du bord de l'ouverture dans la rainure 13.

La présence d'un élément flexible est avantageuse pour permettre l'installation et le réglage du module de remplacement 3a. Lorsque le capot 12 est souple ou flexible, la liaison 10 peut être flexible ou rigide.

La liaison 10 peut être moulée d'une seule pièce avec le capot souple 12 et le module 3a.

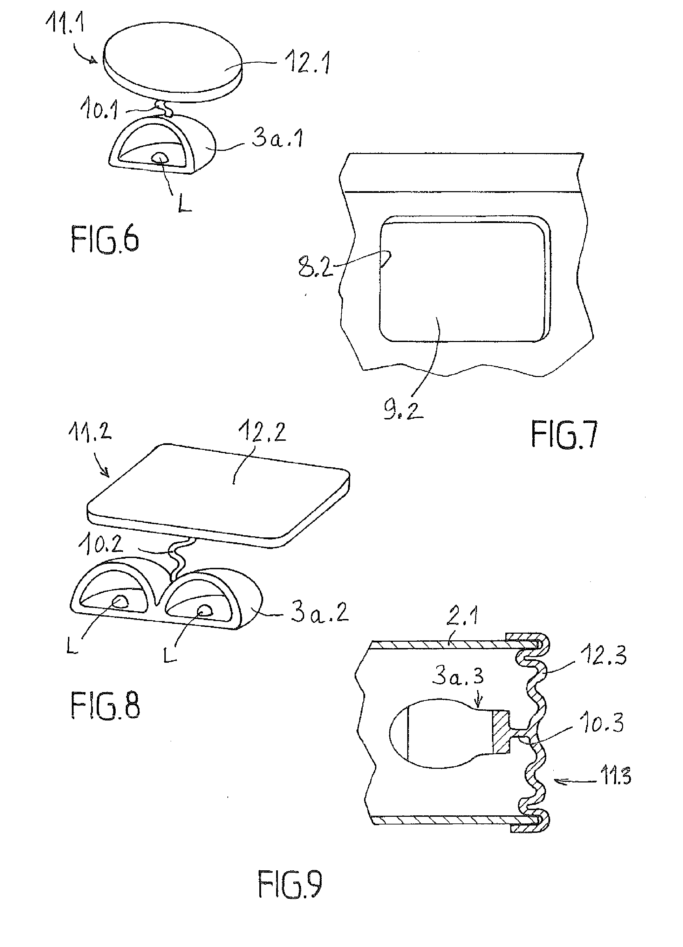

Fig. 6 illustre une variante de réalisation selon laquelle le capot 12.1 de la pièce de fermeture 11.1 est rigide. Dans ce cas, la liaison entre le capot rigide et le module de remplacement 3a.1 est assurée par un lien flexible 10.1 dépliable, qui peut être un lien élastique ou une lame élastique. Selon l'exemple de Fig. 6, le module de remplacement 3a.1 comporte un réflecteur concave et la diode L est placée à l'intérieur de ce réflecteur.

L'installation du module de remplacement 3a.1 s'effectue de la même manière que celle décrite précédemment. La flexibilité et le déploiement du lien flexible 10.1 permettent la mise en place et le réglage de la correction du module de remplacement 3a.1 alors que le capot 12.1 n'est pas fixé dans l'ouverture libérée 9.1. Après mise en place et réglage du module de remplacement 3a.1, le capot de fermeture 12.1 est installé dans l'ouverture 9.1 et y est fixé, par tout moyen approprié : encliquetage, ou collage, ou thermo-soudage.

Le projecteur 1 peut comporter plusieurs modules avec sources lumineuses différentes, en particulier pour assurer au moins deux de fonctions telles que route, code, feu diurne, feu de ville ou autre. Dans ce cas, la paroi périphérique 2a du boîtier comporte autant de contours sécables dédiés différents que modules différents. Sur Fig. 3, on a schématiquement représenté en traits mixtes un deuxième contour sécable 8.2 de forme rectangulaire. Pour simplifier la représentation, ce contour 8.2 entoure le premier contour 8.1. Toutefois, l'emplacement des différents contours sécables est choisi de manière à éviter des interférences entre ces contours tout en facilitant l'opération de remplacement du module auquel le contour sécable est dédié.

La forme des différents contours n'est pas limitée, bien entendu, à une forme circulaire ou rectangulaire telles que représentées sur les dessins. Cette forme peut être ovale, polygonale, sinueuse de façon à être spécifique du module à remplacer.

Les différents contours sécables 8.1, 8.2 peuvent être prévus dans des zones distinctes de la paroi périphérique 2.

Fig. 8 illustre un module de remplacement 3a.2 correspondant à un module d'origine auquel est dédié le contour sécable 8.2. Ce module de remplacement 3a.2 comporte, selon l'exemple représenté, deux réflecteurs concaves juxtaposés, solidaires, équipés chacun à l'intérieur d'une diode L. Le module 3a.2 est attaché par un lien flexible 10.2 à la pièce de fermeture 11.2 formée par un capot rigide 12.2 dont le contour correspond à celui du contour sécable 8.2.

En cas de défaillance d'au moins une des sources lumineuses du module d'origine correspondant au contour sécable 8.2, ce contour est découpé comme illustré sur Fig. 7 pour libérer une ouverture à contour rectangulaire 9.2. Le module défaillant peut être extrait et le module de remplacement 3a.2 est mis en place de la manière décrite précédemment, puis le capot 10.2 vient fermer l'ouverture 9.2 en étant fixé par tout moyen approprié à la paroi 2a du boîtier.

Des repères d'identification, notamment des lettres et/ou des chiffres, non représentés sur les dessins, peuvent être prévus sur les zones de la paroi 2a situées à l'intérieur des contours sécables, ainsi que sur les capots correspondants des modules de remplacement afin d'établir clairement la relation entre un contour sécable, le module d'origine auquel il correspond, et le module de remplacement.

Fig. 9 illustre une variante de réalisation selon laquelle le boîtier 2.1 d'un projecteur ou d'un feu de signalisation présente une forme cylindrique. Le fond de ce boîtier a été retiré par découpe d'un contour sécable entourant le fond. Le module de remplacement 3a.3, attaché par un lien flexible ou rigide 10.3 à la pièce de fermeture 11.3 formée par un capot souple 12.3, a été mis en place et fixé sur le fond du boîtier.

Selon l'invention, du fait que le capot de fermeture est lié au module de remplacement, le risque d'un oubli du capot, après mise en place du module de remplacement, est supprimé.

La forme du capot dédié à un type de module à remplacer détrompe la zone à découper, ce qui permet d'éviter des confusions, notamment une mise en place d'un module de remplacement qui ne correspondrait pas au module défaillant retiré.

L'invention s'applique à tous les systèmes de fixation internes de modules avec sources lumineuses, notamment glissières ou systèmes à verrouillage.

## Revendications

1. Ensemble d'un projecteur ou d'un feu pour véhicule automobile et d'au moins un module de remplacement, ce module étant notamment avec une source lumineuse, le projecteur ou le feu comportant un boîtier dans lequel est disposé au moins un module d'origine, ce module étant notamment avec une source lumineuse, en particulier à LED, le boîtier comportant une paroi, comportant notamment une portion de paroi périphérique solidaire d'une portion de paroi de fond, **caractérisé en ce que :**
- la paroi du boîtier (2) comporte au moins un contour sécable (8.1, 8.2) dédié au module d'origine, contour propre à être découpé pour libérer une ouverture d'accès (9.1, 9.2) pour le remplacement de ce module par un module de remplacement,
- et le module de remplacement (3a, 3a.1, 3a.2, 3a.3) est attaché par une liaison (10, 10.1, 10.2, 10.3) à une pièce de fermeture (11, 11.1, 11.2, 11.3), le contour de la pièce de fermeture correspondant au contour dédié et étant propre à fermer l'ouverture libérée (9.1, 9.2), le profil du contour dédié étant choisi de façon à ce que ce profil soit associé de manière univoque au module d'origine permettant ainsi d'éviter le montage d'un module de remplacement inapproprié à la place du module d'origine.

2. Ensemble selon la revendication 1, dans lequel le projecteur ou le feu comportent plusieurs modules avec sources lumineuses différentes, en particulier pour assurer des fonctions route, code, feu diurne, feu de ville, **caractérisé en ce que :**
- la paroi du boîtier (2) comporte autant de contours sécables dédiés différents (8.1, 8.2) que de modules avec sources lumineuses différentes, chaque contour dédié étant spécifique à l'un des modules et à sa source lumineuse,
- et les modules de remplacement (3a, 3a.1, 3a.2, 3a.3) avec sources lumineuses correspondent aux différents modules d'origine, chaque module de remplacement étant attaché à une pièce de fermeture (11, 11.1, 11.2, 11.3) dont le contour correspond au contour dédié au module d'origine correspondant.

3. Ensemble selon la revendication 1 ou 2, **caractérisé en ce que** la liaison (10, 10.1, 10.2) entre pièce de fermeture et module est souple, en particulier réalisée par un lien flexible, un lien élastique, ou une lame flexible, la pièce de fermeture étant rigide ou souple.

4. Ensemble selon la revendication 1 ou 2, **caractérisé en ce que** la pièce de fermeture est constituée d'un capot souple (12), et la liaison entre le capot souple et le module est rigide.

5. Ensemble selon l'une quelconque des revendications précédentes, **caractérisé en ce que** la pièce de fermeture comporte sur son bord un moyen d'encliquetage (13) pour fixation au boîtier.

6. Projecteur ou feu pour véhicule automobile, comportant un boîtier dans lequel est disposé au moins un module d'origine, ce module étant notamment avec une source lumineuse, en particulier à LED, le boîtier comportant une paroi, comportant notamment une portion de paroi périphérique solidaire d'une portion de paroi de fond, **caractérisé en ce que :**
- la paroi du boîtier (2) comporte au moins un contour sécable (8.1, 8.2) dédié au module d'origine, contour propre à être découpé pour libérer une ouverture d'accès (9.1, 9.2) pour le remplacement de ce module par un module de remplacement, le profil du contour dédié étant choisi de façon à ce que ce profil soit associé de manière univoque au module d'origine permettant ainsi d'éviter le montage d'un module de remplacement inapproprié à la place du module d'origine, de préférence le dispositif étant dépourvu de liaison entre le module d'origine et la portion de paroi délimitée par le contour sécable.

7. Projecteur ou feu selon la revendication 6, comportant plusieurs modules avec sources lumineuses différentes, en particulier pour assurer des fonctions route, code, feu diurne ou feu de ville, **caractérisé en ce que** la paroi du boîtier comporte autant de contours sécables dédiés différents (8.1, 8.2) que de modules avec sources lumineuses différentes, chaque contour dédié étant spécifique de l'un des modules et de sa source lumineuse.

8. Projecteur ou feu pour véhicule automobile comportant un boîtier dans lequel est disposé au moins un module de remplacement à la place d'un module d'origine qui a été retiré du boîtier, ce module de remplacement étant notamment avec une source lumineuse, en particulier à LED, le boîtier comportant une paroi, comportant notamment une portion de paroi périphérique solidaire d'une portion de paroi de fond, **caractérisé en ce que :**
- la paroi du boîtier (2) comporte au moins un contour découpé (8.1, 8.2) pour libérer une ouverture d'accès (9.1, 9.2) ayant servi au remplacement du module d'origine par le module de remplacement,
- et le module de remplacement (3a, 3a.1, 3a.2, 3a.3) est attaché par une liaison (10, 10.1, 10.2, 10.3) à une pièce de fermeture (11, 11.1, 11.2, 11.3), le contour de la pièce de fermeture correspondant au contour dédié et fermant l'ouverture libérée (9.1, 9.2), le profil du contour dédié étant choisi de façon à ce que ce profil soit associé de manière univoque au module d'origine permettant ainsi d'éviter le montage d'un module de remplacement inapproprié à la place du module d'origine.

9. Module de remplacement avec source lumineuse pour un projecteur ou feu selon l'une des revendications 6 à 8, **caractérisé en ce que** le module de remplacement (3a, 3a.1, 3a.2, 3a.3) correspond à un module du boîtier, et est attaché à une pièce de fermeture (11, 11.1, 11.2, 11.3) dont le contour correspond au contour dédié audit module installé dans le boîtier.

10. Procédé de remise en état d'un projecteur ou d'un feu pour véhicule automobile selon la revendication 6 ou 7, dont un module avec source lumineuse, en particulier une LED, est défaillant, **caractérisé en ce que :**
- on découpe le contour sécable (8.1, 8.2) dédié au module à source lumineuse défaillante et on retire la zone de paroi située à l'intérieur de ce contour;
- on extrait du boîtier le module avec source défaillante;
- on choisit le module de remplacement (3a, 3a.1, 3a.2, 3a.3) avec source lumineuse appropriée, et pièce de fermeture attachée;
- on installe le module de remplacement dans le boîtier, et de préférence on procède au réglage, la pièce de fermeture étant laissée libre pendant cette installation et ce réglage;
- et on referme le boîtier en fixant la pièce de fermeture dans l'ouverture (9.1, 9.2) qui avait été libérée par le contour sécable découpé.
